# EUROPEAN PATENT SPECIFICATION

(11) **EP 4 339 237 B1**
(45) Date of publication and mention of the grant of the patent: **30.04.2025**
(21) Application number: 21962465.7
(22) Date of filing: 29.10.2021
(51) Int. Cl.: B29B 7/18, B29B 7/28, B29B 7/82, C08L 21/00, B29B 7/80, C08K 3/22, C08K 5/09, C08K 5/18, C08K 5/47, B29B 7/74, C08J 3/20, C08K 3/04, C08K 3/06

(54) **RUBBER KNEADING METHOD**
KNETVERFAHREN FÜR KAUTSCHUK
PROCÉDÉ DE MALAXAGE DU CAOUTCHOUC

(43) Date of publication of application: 20.03.2024
(73) Proprietor: Sumitomo Riko Company Limited, Komaki-shi, Aichi 485-8550 (JP)
(72) Inventor: NAGARA Kenichi, Komaki-shi, Aichi 485-8550 (JP); MATSUBARA Takayuki, Komaki-shi, Aichi 485-8550 (JP); OZAKI Yuta, Komaki-shi, Aichi 485-8550 (JP); UCHIYAMA Chiaki, Komaki-shi, Aichi 485-8550 (JP); KUGUMIYA So, Komaki-shi, Aichi 485-8550 (JP)
(74) Representative: Müller-Boré & Partner Patentanwälte PartG mbB
(86) International application number: PCT/JP2021/040025
(87) International publication number: WO 2023/073923

(56) References cited:
- EP-A1- 1 552 914
- EP-A1- 3 279 250
- JP-A- 2001 232 632
- JP-A- 2005 199 503
- JP-A- 2013 170 268
- JP-A- 2019 104 109
- JP-A- 2019 202 507
- JP-A- H0 226 709

## Description

### [Technical Field]

The present disclosure relates to a method for kneading rubber in which a compounding agent is added to raw rubber and the raw rubber is kneaded.

### [Background Art]

In the production of rubber products, squeezed rubber (rubber composition) obtained by mixing compounding agents such as a filler and a crosslinking agent with raw rubber and squeezing the raw rubber is in use. Squeezed rubber is produced by, first, masticating raw rubber as necessary, then, adding, among compounding agents, a chemical that is not for crosslinking and kneading the raw rubber (masterbatch mixing) and, finally, adding a chemical that is for crosslinking and kneading the raw rubber (final mixing). The properties of squeezed rubber do not only affect crosslinking properties, workability and the like in post steps, but also relate to the qualities of rubber products in the end. Therefore, reduction in variations in the properties of squeezed rubber is important for the quality improvement and quality equalization of rubber products.

### [Citation List]

### [Patent Literature]

[Patent Literature 1]
   Japanese Laid-open Patent Publication No. H2-227209
[Patent Literature 2]
   Japanese Laid-open Patent Publication No. 2005-199503
[Patent Literature 3]
   Japanese Laid-open Patent Publication No. H2-26709
[Patent Literature 4]
   EP 1 552 914 A1
[Patent Literature 5]
   EP 3 279 250 A1

### [Summary of Invention]

### [Technical Problem]

For example, natural rubber has excellent properties such as a large tensile strength and generation of a small amount of heat due to vibration and is thus used for a variety of rubber products such as tires, anti-vibration rubber and belts. Since raw rubber (crude rubber) of natural rubber has a large molecular weight and a high viscosity, a compounding agent is added and the raw rubber is kneaded after plasticity is imparted by cutting rubber molecules by mastication and decreasing the molecular weight. The viscosity of raw rubber varies with the area of production, working methods and the like and also changes depending on storage environments such as temperatures. Therefore, even when the raw rubber is masticated or kneaded under the same squeezing conditions, due to a difference in viscosity, a shear force or the like that is applied to rubber changes, the dispersion state of a compounding agent changes, and the like, which causes significant variations in the properties of squeezed rubber to be obtained. Patent Literature 4 discloses a rubber kneading machine comprising horizontal rolls for producing a stable quality of kneaded rubber, in particular rubber having a low variation in hardness. Patent Literature 5 discloses an anti-vibration rubber obtained by a process of kneading natural rubber with secondary materials and subsequently measuring the spring properties.

Regarding this point, for example, Patent Literature 1 describes, as a mastication method by which a desired rubber viscosity is obtained upon the completion of mastication without being affected by a variation attributed to the lot number of natural rubber, a method in which the rubber temperature and the instantaneous power in the drive motor of a kneading device during mastication are monitored and the mastication is stopped when the instantaneous power reaches a predetermined value or less. In addition, Patent Literature 2 describes a kneading method in which the viscosity of raw rubber is measured or estimated before kneading and/or in the middle of kneading and the amount of at least one compounding agent to be compounded is determined based on the measured or estimated value. In addition, Patent Literature 3 describes a kneading control device that determines when a kneading step will be ended based on the viscoelastic properties of an elastomer in the middle of the kneading step.

According to the methods described in Patent Literature 1 and 2, a variation in the viscosity of a rubber material after mastication or kneading is suppressed by estimating the viscosity of the rubber material in the middle of mastication or in the middle of kneading and adjusting the squeezing time or adjusting the amount of a compounding agent to be compounded based on the estimated viscosity. However, there are inherent significant variations derived from natural products in the qualities of natural rubber. According to the present inventors' studies, it was found that, even when the viscosity of a rubber material is controlled in a squeezing step, a variation is caused in a property of squeezed rubber to be obtained, specifically, hardness after crosslinking, the static spring constant or the like. The variation in the property of squeezed rubber directly leads to a variation in the performance of final products. Particularly, in rubber products such as anti-vibration rubber, management of spring properties such as hardness and static spring constant becomes important. Therefore, in order to produce rubber products having stable qualities, management of the viscosity alone in the squeezing step is not sufficient. According to the device described in Patent Literature 3, the viscoelastic properties of a rubber material in the middle of kneading are measured, the squeezing time is adjusted based on the measured viscoelastic properties to suppress a variation in the elastic modulus of squeezed rubber. However, measurement of the viscoelastic properties in the middle of kneading is troublesome, and devices to which this device is applicable are limited.

The present disclosure has been made in consideration of such circumstances, and an objective of the present disclosure is to provide a method for kneading rubber enabling the obtainment of squeezed rubber having a small variation in spring properties.

### [Solution to Problem]

In order to solve the above-described problem, a method for kneading rubber of the present disclosure has a first step of compounding and kneading a reference lot of raw rubber and a secondary material in a specific composition to prepare a reference rubber composition and measuring a spring property of reference crosslinked rubber obtained by crosslinking the reference rubber composition, a second step of compounding and kneading a target lot of raw rubber and a secondary material in the same specific composition as in the first step to prepare a target rubber composition and measuring a spring property of target crosslinked rubber obtained by crosslinking the target rubber composition, and a third step of comparing the spring property of the target crosslinked rubber with the spring property of the reference crosslinked rubber to set one or more of a compounding condition and a squeezing condition that is adopted in the case of kneading the target lot of the raw rubber in a product composition, in which the target lot of the raw rubber is kneaded in the product composition under the condition that is set in the third step to obtain a rubber composition for a product.

### [Advantageous Effects of Invention]

As described above, there are significant variations in the qualities of natural rubber, and a difference in the lot of raw rubber leads to different qualities in many cases. The present inventors considered that a variation in a property of a rubber material after mastication (hereinafter, referred to as "masticated rubber" as appropriate) causes a variation in the properties of squeezed rubber, repeated studies and consequently found that chemicals added correlate with spring properties in the case of comparing crosslinked rubber produced by adding only a chemical necessary for crosslinking to the masticated rubber and crosslinked squeezed rubber produced in a product composition. The method for kneading rubber of the present disclosure has been made based on the above-described finding, and a variation in the properties of a rubber composition (squeezed rubber) to be obtained is reduced by ascertaining the spring properties of raw rubber (including masticated rubber) in advance and utilizing the information in actual kneading. That is, in the method for kneading rubber of the present disclosure, neither the viscosity of raw rubber in the middle of kneading is estimated nor the viscoelastic properties are measured, the spring properties of masticated rubber are predicted based on the spring properties of the raw rubber, and a compounding condition and a squeezing condition that are necessary for kneading are set such that the spring properties become desired values.

**In** the first step, a spring property of the reference crosslinked rubber for which the reference lot of the raw rubber has been used is measured. **In** the second step, a spring property of the target crosslinked rubber for which the target lot of the raw rubber has been used is measured. Here, the reference crosslinked rubber and the target crosslinked rubber have the same specific composition. The specific composition is composed of the raw rubber and the secondary material and is different from an actual product composition. For example, as the secondary material, a chemical is incorporated only to the minimum extent necessary to measure the spring property, whereby the intrinsic properties of the raw rubber can be obtained by extremely decreasing the influence of the compounding agent. **In** the third step, one or more of a compounding condition and a squeezing condition at the time of kneading the target lot of the raw rubber in the actual product composition is set based on a result obtained by comparing the spring property of the target crosslinked rubber and the spring property of the reference crosslinked rubber. Therefore, the difference between the spring property of the rubber composition for a product that is obtained using the target lot of the raw rubber and a spring property of a rubber composition for a product that is obtained using the reference lot of the raw rubber becomes small. That is, a variation in the spring property becomes small.

As described above, according to the method for kneading rubber of the present disclosure, it is possible to reduce a variation in the spring properties of the rubber composition for a product. As a result, it is possible to improve and equalize the qualities of rubber products. In addition, since a variation in the spring properties of rubber compositions for a product is reduced, the percentage defective of rubber products decreases, and the waste of a lot of the raw rubber can be decreased.

### [Brief Description of Drawings]

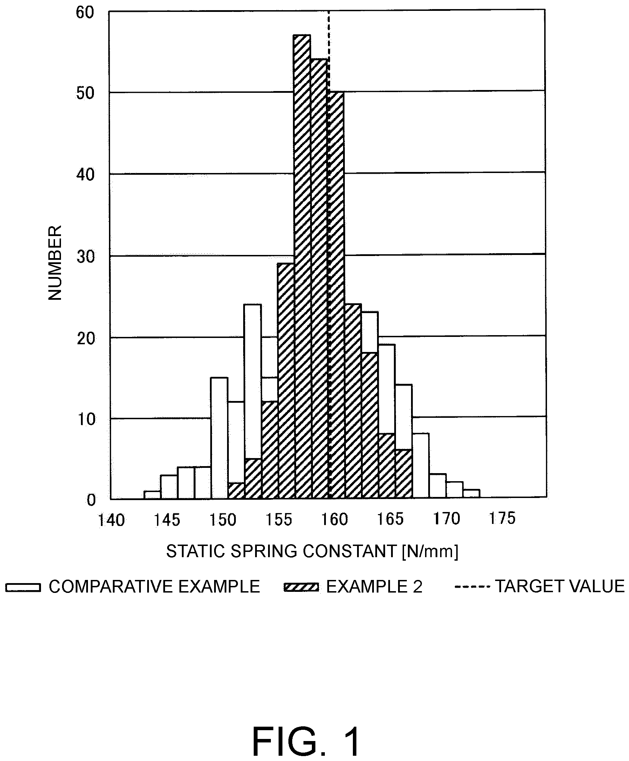

Fig. 1 is a histogram showing measurement results of the static spring constants of anti-vibration rubber.

### [Description of Embodiments]

An embodiment of a method for kneading rubber of the present disclosure will be described. The embodiment is not limited to the following form and can be carried out in a variety of modified forms or improved forms that a person in the skill is able to carry out. The method for kneading rubber of the present disclosure has a first step, a second step and a third step, and a target lot of raw rubber is kneaded in a product composition under a condition that is set in the third step to obtain a rubber composition for a product. Hereinafter, each step will be described.

### <First step>

In the first step, a reference lot of raw rubber and a secondary material are compounded and kneaded in a specific composition to prepare a reference rubber composition, and a spring property of crosslinked reference rubber obtained by crosslinking the reference rubber composition is measured.

The "lot" of the reference lot and the target lot in the present disclosure means, for example, the minimum unit of raw rubber produced on the same production day or under the same condition while varying with management forms by producers of raw rubber. The reference lot is a lot different from the target lot, but the kind of the raw rubber is the same in the reference lot and in the target lot. The kind of the raw rubber is not limited and may be selected as appropriate depending on a rubber product to be produced. For example, the kind of the raw rubber may be natural rubber or synthetic rubber such as isoprene rubber, butadiene rubber, styrene butadiene rubber or chloroprene rubber. **In** the case of producing anti-vibration rubber using a rubber composition for a product that is obtained by the method for kneading rubber of the present disclosure, natural rubber is preferable. The raw rubber includes not only rubber after production but also masticated rubber masticated after production.

The reference rubber composition is prepared by compounding a secondary material with the raw rubber. The specific composition, which is the composition of the reference rubber composition, is different from the composition of the rubber composition for a product, that is, a product composition at the time of actually producing a rubber product using the target lot of the raw rubber and is not particularly limited as long as the composition is cross-linkable. The specific composition is desirably a pure rubber composition in which the secondary material is limited to an aliphatic acid, zinc oxide, a crosslinking agent and a vulcanization accelerator. Alternatively, the specific composition is desirably a standard composition obtained by adding a reinforcing agent to the pure rubber composition. From the viewpoint of obtaining the intrinsic properties of the raw rubber by extremely decreasing the influence of the compounding agents, the pure rubber composition is more preferable. Each of the chemicals may be selected as appropriate depending on the kind of the raw rubber. Examples of the aliphatic acid include stearic acid, palmitic acid and the like. Examples of the crosslinking agent include sulfur, organic sulfur compounds such as alkylphenol sulfides, organic peroxides and the like. Examples of the vulcanization accelerator include guanidine-based compounds, thiuram-based compounds, thiazole-based compounds, sulfenamide-based compounds, dithiocarbamic acid-based compounds and other compounds. Examples of the reinforcing agent include carbon black, silica and the like.

Kneading can be carried out using a closed kneading machine such as a Banbury mixer or a kneader, an open roll or the like. The secondary materials that are added to the raw rubber may all be added at the same time; however, from the viewpoint of suppressing a crosslinking reaction, it is desirable to, first, add a chemical that is not for crosslinking, knead the raw rubber, then, add a chemical that is for crosslinking and knead the raw rubber. The reference rubber composition prepared as described above is crosslinked by being held at a predetermined temperature for a predetermined time. For example, in a case where the raw rubber is natural rubber, the reference rubber composition may be held at a temperature of 140°C to 180°C for 5 to 30 minutes. In addition, a spring property of the obtained reference crosslinked rubber is measured.

As the spring properties, one or more selected from a static spring constant, a dynamic spring constant and hardness are desirably measured. Among them, the static spring constant is preferably measured since the static spring constant becomes an index of anti-vibration performance. The static spring constant and the dynamic spring constant may be measured according to, for example, the method regulated in JIS K 6385: 2012. Regarding the hardness, for example, the type A durometer hardness regulated in JIS K 6253-3: 2012 may be measured.

### <Second step>

In the second step, a target lot of raw rubber and a secondary material are compound and kneaded in the same specific composition as in the first step to prepare a target rubber composition, and a spring property of target crosslinked rubber obtained by crosslinking the target rubber composition is measured.

In the present step, the spring property of the target lot of the raw rubber, which is a kneading target, is measured in the same manner as in the first step. The raw rubber and the specific composition of the target rubber composition are the same as those for the above-described reference lot. In addition, a kneading method, a crosslinking method and a method for measuring the spring property of the target crosslinked rubber are also the same as those in the first step.

### <Third step>

In the third step, the spring property of the target crosslinked rubber measured in the second step is compared with the spring property of the reference crosslinked rubber measured in the first step to set one or more of a compounding condition and a squeezing condition that are adopted in the case of kneading the target lot of the raw rubber in a product composition.

In the present step, the spring property of the target crosslinked rubber is compared with the spring property of the reference crosslinked rubber to check whether the values are the same as each other or by how much one value is larger or smaller than the other value. The spring property of the reference crosslinked rubber, which is a comparison target, may be the spring property that is measured using one reference lot of the raw rubber or the average value of the spring properties that are each measured using a different reference lot of the raw rubber for each reference lot. The spring property that is measured using one reference lot of the raw rubber is preferably adopted as the spring properties of the reference crosslinked rubber, which is the comparison target, since the comparison is easy. In this case, which lot is to be measured as the one reference lot is not limited, but the previous lot is preferably measured as the reference lot since the management is easy. The previous lot is a lot that has been kneaded immediately before the target lot. It is common to impart numbers for management (lot numbers) to the lots of the raw rubber. For example, in a case where the lot numbers of the raw rubber are imparted as consecutive natural numbers such as 1, 2, ··· in the order of kneading, when the lot number of the target lot is "n", the lot having a lot number of "n-1" becomes the previous lot (n is a natural number of two or higher).

The product composition at the time of actually kneading the target lot of the raw rubber may be selected as appropriate depending on a rubber product to be produced. Examples of the compounding agent that is added to the raw rubber include an aliphatic acid, zinc oxide, a reinforcing agent, a non-reinforcing filler (calcium carbonate, talc or the like), an anti-aging agent, a softener, a coloring agent, a crosslinking agent, a vulcanization accelerator and the like. For example, a product composition for anti-vibration rubber is preferably a composition composed of natural rubber (raw rubber), an aliphatic acid, zinc oxide, a reinforcing agent, an anti-aging agent, a softener, a crosslinking agent and a vulcanization accelerator. In this case, as the aliphatic acid, stearic acid, palmitic acid or the like is preferably used. As the reinforcing agent, carbon black, silica or the like is preferably used. As the anti-aging agent, a carbamate-based compound, a phenylene diamine-based compound, a phenol-based compound, a diphenylamine-based compound, a quinoline-based compound, an imidazole-based compound, wax or the like is preferably used. As the softener, a naphthene-based oil, a paraffin-based oil, an aroma-based oil or the like is preferably used. As the crosslinking agent, sulfur, an organic sulfur compound such as alkylphenol sulfide or the like is preferably used. As the vulcanization accelerator, a compound such as a guanidine-based compound, a thiuram-based compound, a thiazole-based compound, a sulfenamide-based compound or a dithiocarbamic acid-based compound is preferably used.

A variety of conditions need to be set at the time of kneading, but examples of compounding conditions that are set in the present step include the amount of the raw rubber blended, the amount of carbon black (the amount of the reinforcing agent), the amount of the crosslinking agent, the amount of the oil (the amount of the softener) and the like. For example, in a case where the spring property of the target crosslinked rubber is larger than the spring properties of the reference crosslinked rubber, it is preferable to blend rubber that is the same kind as the target lot of the raw rubber and has a smaller spring property (softer). Besides this, it is also preferable to decrease the amount of carbon black, decrease the amount of the crosslinking agent or increase the amount of the oil compared with preset reference specifications. Examples of the squeezing condition that is set in the present step include the power value of the closed kneading machine to be used, the rotational speed of a rotor, the temperature of a rubber material during kneading, the squeezing time and the like. For example, in a case where the spring property of the target crosslinked rubber is different from the spring property of the reference crosslinked rubber, it is preferable to adjust the cumulative power amount of the closed kneading machine, the rotational speed of a rotor, the temperature of a rubber material during kneading, the squeezing time and the like with respect to the preset reference specifications. In the present step, any one or both of the compounding condition and the squeezing condition may be set. As the setting of the condition, not only a change from the reference specifications but also the adoption of the reference specification unchanged are included. For example, in a case where it is determined that the preset reference specifications do not need to be changed as in a case where the spring property of the target crosslinked rubber is the same as the spring property of the reference crosslinked rubber, the reference specifications may be adopted unchanged, that is, the compounding condition and the squeezing condition may be set with no adjustment.

In the method for kneading rubber of the present disclosure, the target lot of the raw rubber is kneaded in the product composition under the condition that is set in the third step to obtain a rubber composition for a product. Kneading is preferably carried out using a closed kneading machine such as a Banbury mixer or a kneader, an open roll or the like. The compounding agents that are added to the raw rubber may be all added at the same time; however, from the viewpoint of suppressing a crosslinking reaction, it is desirable to, first, add a chemical that is not for crosslinking, knead the raw rubber, then, add a chemical that is for crosslinking and knead the raw rubber. More detailed description of the latter case using a product composition for an anti-vibration rubber as an example is as follows: first, compounding agents other than a crosslinking agent and a vulcanization accelerator may be added to natural rubber as raw rubber, the raw rubber may be kneaded with a Banbury mixer, then, the kneaded substance may be moved to an open roll, the crosslinking agent and the vulcanization accelerator may be added, and the raw rubber may be further kneaded. The obtained rubber composition for a product is crosslinked and molded by a method such as injection molding and thereby turns into a rubber product such as an anti-vibration rubber. There is a case where the same lot of the raw rubber is divided and kneaded a plurality of times. **In** this case, the compounding condition and the squeezing condition may be additionally adjusted in each of the kneading steps.

### Examples

Next, the present disclosure will be more specifically described using examples.

### (1) Example 1

### <First step>

First, as a reference lot, a lot 1 of natural rubber and secondary materials were compounded in a pure rubber composition shown in Table 1 and kneaded, thereby preparing a reference rubber composition.

**[Table 1]**

| | | Pure rubber composition [phr] |
|---|---|---|
| Raw rubber | Natural rubber | 100 |
| Secondary material | Aliphatic acid | 0.5 |
| | Zinc oxide | 6 |
| | Crosslinking agent | 3.5 |
| | Vulcanization accelerator | 0.5 |

In Table 1, the details of the secondary materials used are as follows. The natural rubber used is masticated rubber that has been masticated in advance (which is also true for a target lot of natural rubber below).
Aliphatic acid: Stearic acid ("LUNAC (registered trademark) S-70V" manufactured by Kao Corporation).
Zinc oxide: Zinc oxide JIS #2 (manufactured by Sakai Chemical Industry Co., Ltd.).
Crosslinking agent: Sulfur (manufactured by Hosoi Chemical Industry Co., Ltd., fine sulfur powder).
Vulcanization accelerator: Thiazole-based vulcanization accelerator ("SANCELER (registered trademark) M-G" manufactured by Sanshin Chemical Industry Co., Ltd.)

The reference rubber composition was prepared using an open roll including two (right and left) rolls in the following order (a) to (f).
(a) The roll gap is set to 0.2 mm, and the natural rubber is passed through between the rolls twice without being wound around the rolls.
(b) The roll gap is set to 1.4 mm, the natural rubber is wound around the rolls and squeezed, and the roll gap is widened to 1.8 mm once the natural rubber becomes a flat band shape.
(c) The secondary materials are all added.
(d) The right roll and the left roll are each rolled alternatively in opposite directions three times.
(e) A rubber material is released from the rolls, the gap between the rolls is set to 0.8 mm, and the rubber material is again wound back and mixed six times.
(f) The rubber material is removed from the rolls once the rubber material becomes a 2.2 mm-thick sheet shape.

Next, the obtained reference rubber composition was accommodated in a mold and crosslinked by being held at 150°C for 30 minutes to produce a cylindrical sample of reference crosslinked rubber. The sizes of the sample were set to 29.0 ± 0.5 mm in diameter and 12.5 ± 0.5 mm in thickness. The static spring constant of the reference crosslinked rubber was measured using the produced sample. The static spring constant was measured according to the method regulated in JIS K 6385: 2012. Specifically, the sample was compressed at a rate of 10 ± 1 mm/min under the application of a load in the thickness direction of the sample and, once the amount of the sample deformed reached a predetermined amount, immediately restored by removing the load at the same rate. In addition, the static spring constant was obtained from the obtained load-deformation curve. As a result, the static spring constant of the reference crosslinked rubber was 80 N/mm.

### <Second step>

As the target lot, a lot 2 of natural rubber and secondary materials were compounded in a pure rubber composition shown in Table 1 above and kneaded, thereby preparing a target rubber composition. A method for preparing the target rubber composition was the same as the method for preparing the reference rubber composition and was carried out using the open roll. In addition, a sample of target crosslinked rubber was produced by crosslinking the target rubber composition by the same method as the method for producing the sample of the reference crosslinked rubber, and the static spring constant of the same sample was measured by the above-described method for measuring the static spring constant. The static spring constant of the lot 2 of the target crosslinked rubber was 80 N/mm.

### <Third step>

As a result of comparison, it was found that the static spring constant of the lot 2 of the target crosslinked rubber and the static spring constant of the reference crosslinked rubber were all 80 N/mm and both were the same. Therefore, regarding the compounding condition and the squeezing condition for the case of kneading the lot 2 of the natural rubber in the product composition, it was determined that there was no need to change the preset reference specifications, and the compounding condition and the squeezing condition were set as described in the reference specifications. That is, in the reference specifications, the conditions are set such that the raw rubber is not blended ("the amount of the raw rubber blended: zero").

### <Kneading in product composition>

The lot 2 of the raw rubber and compounding agents were compounded in a product composition for anti-vibration rubber shown in Table 2 and kneaded, thereby preparing a rubber composition for anti-vibration rubber.

**[Table 2]**

| | | Product composition [phr] |
|---|---|---|
| Raw rubber | Natural rubber (lot 2) | 100 |
| Compounding agent | Aliphatic acid | 2 |
| | Zinc oxide | 5 |
| | Anti-aging agent | 1 |
| | Reinforcing agent | 40 |
| | Softener | 3 |
| | Crosslinking agent | 2.5 |
| | Vulcanization accelerator | 1 |

In Table 2, the details of the compounding agents used are as follows.
Aliphatic acid: Stearic acid ("LUNAC (registered trademark) S-70V" manufactured by Kao Corporation).
Zinc oxide: Zinc oxide JIS #2 (manufactured by Sakai Chemical Industry Co., Ltd.).
Anti-aging agent: Phenylene diamine-based anti-aging agent ("ANTIGENE (registered trademark) 6C" manufactured by Sumitomo Chemical Co., Ltd.)
Reinforcing agent: HAF-class carbon black ("SEAST (registered trademark) 3" manufactured by Tokai Carbon Co., Ltd.)
Softener: Naphthene-based oil ("SUNTHENE 410" manufactured by Japan Sun Oil Company, Ltd.)
Crosslinking agent: Sulfur (manufactured by Hosoi Chemical Industry Co., Ltd., fine sulfur powder).
Vulcanization accelerator: Sulfenamide-based vulcanization accelerator ("SANCELER (registered trademark) CM-G" manufactured by Sanshin Chemical Industry Co., Ltd.).

The rubber composition for anti-vibration rubber was prepared as described below. First, chemicals other than the crosslinking agent and the vulcanization accelerator were added to the lot 2 of the natural rubber and kneaded using a Banbury mixer at 60°C to 160°C for five minutes. Next, the kneaded substance was moved to the open roll, the crosslinking agent and the vulcanization accelerator were added thereto, and the kneaded substance was kneaded at 80°C to 100°C for five minutes.

### (2) Example 2

### <First step>

The lot 1 in Example 1 was used as a reference lot, and the same static spring constant as the static spring constant of the reference crosslinked rubber in Example 1 was used as a spring property that was to be compared with that of target crosslinked rubber in the following third step.

### <Second step>

As a target lot, a lot 3 of natural rubber and secondary materials were compounded in a pure rubber composition shown in Table 1 above and kneaded, thereby preparing a target rubber composition. A method for preparing the target rubber composition was the same as the method for preparing the reference rubber composition in Example 1 and was carried out using an open roll. In addition, a sample of the target crosslinked rubber was produced by crosslinking the target rubber composition by the same method as the method for producing the sample of the reference crosslinked rubber in Example 1, and the static spring constant of the sample was measured by the same method as the method for measuring the static spring constant in Example 1. The static spring constant of the lot 3 of the target crosslinked rubber was 84 N/mm.

### <Third step>

As a result of comparing the static spring constant of the lot 3 of the target crosslinked rubber with the static spring constant of the reference crosslinked rubber, the static spring constant of the lot 3 of the target crosslinked rubber was larger by 4 N/mm. Therefore, in the case of kneading the lot 3 of the natural rubber in the product composition, the conditions were set by changing a compounding condition of "the amount of the raw rubber blended". Specifically, as rubber for adjustment, natural rubber having a static spring constant, which was measured in the same pure rubber composition as that for the lot 3 of the target crosslinked rubber, of 76 N/mm was prepared, and the lot 3 of the natural rubber and the natural rubber for adjustment were blended such that the mass ratio therebetween reached 1:1.

### <Kneading in product composition>

The lot 3 of the raw rubber, the natural rubber for adjustment and compounding agents were compounded in a product composition for anti-vibration rubber shown in Table 3 and kneaded, thereby preparing a rubber composition for anti-vibration rubber.

**[Table 3]**

| | | Product composition [phr] |
|---|---|---|
| Raw rubber | Natural rubber (lot 3) | 50 |
| | Natural rubber (for adjustment) | 50 |
| Compounding agent | Aliphatic acid | 2 |
| | Zinc oxide | 5 |
| | Anti-aging agent | 1 |
| | Reinforcing agent | 40 |
| | Softener | 3 |
| | Crosslinking agent | 2.5 |
| | Vulcanization accelerator | 1 |

The compounding agents used are all the same as those used at the time of preparing the rubber composition for anti-vibration rubber in Example 1. In addition, a kneading method is also the same as that in Example 1 except that the lot 2 of the natural rubber was changed to the lot 3 of the natural rubber and the natural rubber for adjustment.

### (3) Example 3

The third step in Example 2 was changed, and a rubber composition for anti-vibration rubber was prepared using the lot 3 of the natural rubber. **In** a third step of Present Example 3, conditions were set by changing not a compounding condition of "the amount of the raw rubber blended" but a squeezing condition of "the power value of a closed kneading machine" as a condition for the case of kneading a lot 3 of natural rubber in a product composition. Specifically, the target value of the cumulative power amount in a kneading step in which a Banbury mixer was used was set to 20 kWh, which was larger than that in the reference specification of 16 kWh.

The product composition of the lot 3 of the natural rubber and compounding agents is as shown in Table 4.

**[Table 4]**

| | | Product composition [phr] |
|---|---|---|
| Raw rubber | Natural rubber (lot 3) | 100 |
| Compounding agent | Aliphatic acid | 2 |
| | Zinc oxide | 5 |
| | Anti-aging agent | 1 |
| | Reinforcing agent | 40 |
| | Softener | 3 |
| | Crosslinking agent | 2.5 |
| | Vulcanization accelerator | 1 |

The compounding agents used are all the same as those used at the time of preparing the rubber composition for anti-vibration rubber in Example 1. First, chemicals other than the crosslinking agent and the vulcanization accelerator were added to the lot 3 of the natural rubber and kneaded using the Banbury mixer at 60°C to 160°C for five minutes. At this time, the target value of the cumulative power amount of the Banbury mixer was set to 20 kWh. Next, the kneaded substance was moved to an open roll, the crosslinking agent and the vulcanization accelerator were added thereto, and the kneaded substance was kneaded at 80°C to 100°C for five minutes.

### (4) Evaluation of variations in spring properties

A rubber composition for anti-vibration rubber was prepared for each lot of the natural rubber by the kneading method in Example 2, that is, the kneading method in which "the amount of the raw rubber blended" was set based on the comparison result of the static spring constant of the target crosslinked rubber and the static spring constant of the reference crosslinked rubber in the third step, and anti-vibration rubber was produced by crosslinking the rubber composition for anti-vibration rubber. The static spring constants were compared using the target lot and the previous lot. The number of the lots of the natural rubber used was 60 lots. Since a plurality of anti-vibration rubbers were produced from the same lot of the rubber composition for anti-vibration rubber, the number of the anti-vibration rubbers obtained in the end was 256. In addition, the static spring constants of the produced anti-vibration rubbers were measured according to the above-described method regulated in JIS K 6385: 2012. Besides these, for comparison, rubber compositions for anti-vibration rubber were prepared by setting the compounding conditions, the squeezing conditions and the like to be constant as described in the reference specifications without considering the spring property of each lot and carrying out kneading, and anti-vibration rubbers were produced by crosslinking the rubber compositions for anti-vibration rubber. Hereinafter, this kneading method will be referred to as "the kneading method of a comparative example". In the kneading method of a comparative example, the number of lots of natural rubber used was 65 lots, and, since a plurality of anti-vibration rubbers was produced from the same lot of the rubber composition for anti-vibration rubber as in the case of Example 2, the number of the anti-vibration rubbers obtained in the end was 283. In addition, the static spring constants of the produced anti-vibration rubbers were measured by the same method as in Example 2.

Fig. 1 shows a measurement result of the static spring constant of the anti-vibration rubber obtained by each kneading method. Table 5 shows the values of standard deviations and the like calculated from the measurement results of the static spring constants.

**[Table 5]**

| | Kneading method in Example 2 | Kneading method in comparative example |
|---|---|---|
| Target value of static spring constant [N/mm] | 159.7 | |
| Number of data | 265 | 283 |
| Average value of static spring constant [N/mm] | 158.945 | 158.506 |
| Standard deviation (σ) | 2.902 | 5.455 |

As shown in Fig. 1 and Table 5, in the case of using the kneading method of Example 2, variations in the static spring constant became small compared with the case of using the kneading method of the comparative example. That is, it was confirmed that, when the method for kneading rubber of the present disclosure is used, a variation in the spring property is small, and anti-vibration rubber having stable quality can be produced.

## Claims

1. A method for kneading rubber comprising:
a first step of compounding and kneading a reference lot of raw rubber and a secondary material in a specific composition to prepare a reference rubber composition and measuring a spring property of reference crosslinked rubber obtained by crosslinking the reference rubber composition;
a second step of compounding and kneading a target lot of raw rubber and a secondary material in the same specific composition as in the first step to prepare a target rubber composition and measuring a spring property of target crosslinked rubber obtained by crosslinking the target rubber composition; and
a third step of comparing the spring property of the target crosslinked rubber with the spring property of the reference crosslinked rubber to set one or more of a compounding condition and a squeezing condition that is adopted in the case of kneading the target lot of the raw rubber in a product composition,
wherein the target lot of the raw rubber is kneaded in the product composition under the condition that is set in the third step to obtain a rubber composition for a product.

2. The method for kneading rubber according to claim 1,
wherein the specific composition is a pure rubber composition in which the secondary material is composed of an aliphatic acid, zinc oxide, a crosslinking agent and a vulcanization accelerator or a standard composition in which the secondary material is composed of an aliphatic acid, zinc oxide, a reinforcing agent, a crosslinking agent and a vulcanization accelerator.

3. The method for kneading rubber according to claim 1,
wherein the specific configuration is a pure rubber composition in which the secondary material is composed of an aliphatic acid, zinc oxide, a crosslinking agent and a vulcanization accelerator.

4. The method for kneading rubber according to any one of claims 1 to 3,
wherein the spring property of the reference crosslinked rubber in the third step is a spring property that is measured using one reference lot of the raw rubber or an average value of the spring properties that are each measured using a different reference lot of the raw rubber for each reference lot.

5. The method for kneading rubber according to any one of claims 1 to 3,
wherein the spring property of the reference crosslinked rubber in the third step is a spring property that is measured using one reference lot of the raw rubber.

6. The method for kneading rubber according to claims 4 or 5,
wherein the one reference lot is a previous lot of the target lot.

7. The method for kneading rubber according to any one of claims 1 to 6,
wherein the spring property is one or more selected from a static spring constant, a dynamic spring constant and hardness.

8. The method for kneading rubber according to any one of claims 1 to 6,
wherein the spring property is a static spring constant.

9. The method for kneading rubber according to any one of claims 1 to 8,
wherein the compounding condition in the third step is one or more selected from an amount of the raw rubber blended, an amount of carbon black, an amount of a crosslinking agent and an amount of an oil.

10. The method for kneading rubber according to any one of claims 1 to 9,
wherein the squeezing condition in the third step is one or more selected from a power value of a closed kneading machine to be used, a rotational speed of a rotor, a temperature of a rubber material during kneading and a squeezing time.

11. The method for kneading rubber according to any one of claims 1 to 10,
wherein the reference lot and the target lot of the raw rubbers are natural rubber.

12. The method for kneading rubber according to any one of claims 1 to 11,
wherein the product composition in the third step is a composition for anti-vibration rubber, and
a rubber composition for anti-vibration rubber is obtained by kneading the target lot of the raw rubber in the product composition under the condition that is set in the third step.

## Patentansprüche

1. Verfahren zum Kneten von Kautschuk, umfassend:
einen ersten Schritt zum Mischen und Kneten einer Referenzcharge von Rohkautschuk und eines Sekundärmaterials in einer spezifischen Mischung, um eine Referenzkautschukmischung herzustellen und eine Federeigenschaft von vernetztem Referenzkautschuk zu messen, der durch Vernetzen der Referenzkautschukmischung erhalten wird;
einen zweiten Schritt zum Mischen und Kneten einer Zielcharge von Rohkautschuk und eines Sekundärmaterials in derselben spezifischen Mischung wie in dem ersten Schritt, um eine Zielkautschukmischung herzustellen und eine Federeigenschaft von vernetztem Zielkautschuk zu messen, der durch Vernetzen der Zielkautschukmischung erhalten wird;
einen dritten Schritt zum Vergleichen der Federeigenschaft des vernetzten Zielkautschuks mit der Federeigenschaft des vernetzten Referenzkautschuks, um eine oder mehrere Mischbedingungen und Quetschbedingungen einzustellen, die im Fall des Knetens der Zielcharge des Rohkautschuks in einer Produktmischung angewendet werden,
wobei die Zielcharge des Rohkautschuks in der Produktmischung unter der Bedingung geknetet wird, die in dem dritten Schritt eingestellt wird, um eine Kautschukmischung für ein Produkt zu erhalten.

2. Verfahren zum Kneten von Kautschuk nach Anspruch 1,
wobei die spezifische Mischung eine reine Kautschukmischung ist, in der das Sekundärmaterial aus einer aliphatischen Säure, Zinkoxid, einem Vernetzungsmittel und einem Vulkanisationsbeschleuniger gebildet ist, oder eine Standardmischung ist, in der das Sekundärmaterial aus einer aliphatischen Säure, Zinkoxid, einem Verstärkungsmittel, einem Vernetzungsmittel und einem Vulkanisationsbeschleuniger gebildet ist.

3. Verfahren zum Kneten von Kautschuk nach Anspruch 1,
wobei die spezifische Konfiguration eine reine Kautschukmischung ist, in der das Sekundärmaterial aus einer aliphatischen Säure, Zinkoxid, einem Vernetzungsmittel und einem Vulkanisationsbeschleuniger gebildet ist.

4. Verfahren zum Kneten von Kautschuk nach einem der Ansprüche 1 bis 3,
wobei die Federeigenschaft des vernetzten Referenzkautschuks in dem dritten Schritt eine Federeigenschaft ist, die unter Verwendung einer Referenzcharge des Rohkautschuks gemessen wird, oder ein Durchschnittswert der Federeigenschaften ist, die jeweils unter Verwendung einer anderen Referenzcharge des Rohkautschuks für jede Referenzcharge gemessen werden.

5. Verfahren zum Kneten von Kautschuk nach einem der Ansprüche 1 bis 3,
wobei die Federeigenschaft des vernetzten Referenzkautschuks in dem dritten Schritt eine Federeigenschaft ist, die unter Verwendung einer Referenzcharge des Rohkautschuks gemessen wird.

6. Verfahren zum Kneten von Kautschuk nach den Ansprüchen 4 oder 5,
wobei die eine Referenzcharge eine vorhergehende Charge der Zielcharge ist.

7. Verfahren zum Kneten von Kautschuk nach einem der Ansprüche 1 bis 6,
wobei die Federeigenschaft eine oder mehrere ist, ausgewählt aus einer statischen Federkonstante, einer dynamischen Federkonstante und einer Härte.

8. Verfahren zum Kneten von Kautschuk nach einem der Ansprüche 1 bis 6,
wobei die Federeigenschaft eine statische Federkonstante ist.

9. Verfahren zum Kneten von Kautschuk nach einem der Ansprüche 1 bis 8,
wobei die Mischbedingung in dem dritten Schritt eine oder mehrere ist, ausgewählt aus einer Menge des kombinierten Rohkautschuks, einer Menge Ruß, einer Menge eines Vernetzungsmittels und einer Menge eines Öls.

10. Verfahren zum Kneten von Kautschuk nach einem der Ansprüche 1 bis 9,
wobei die Quetschbedingung in dem dritten Schritt eine oder mehrere ist, ausgewählt aus einem Leistungswert einer geschlossenen Knetmaschine, die verwendet werden soll, einer Rotationsgeschwindigkeit eines Rotors, einer Temperatur eines Kautschukmaterials während des Knetens und einer Quetschzeit.

11. Verfahren zum Kneten von Kautschuk nach einem der Ansprüche 1 bis 10,
wobei die Referenzcharge und die Zielcharge der Rohkautschuke Naturkautschuk sind.

12. Verfahren zum Kneten von Kautschuk nach einem der Ansprüche 1 bis 11,
wobei die Produktmischung in dem dritten Schritt eine Mischung für Antivibrationskautschuk ist, und
eine Kautschukmischung für Antivibrationskautschuk durch Kneten der Zielcharge des Rohkautschuks in der Produktmischung unter der Bedingung erhalten wird, die in dem dritten Schritt eingestellt ist.

## Revendications

1. Procédé de malaxage de caoutchouc, le procédé comprenant :
une première étape comprenant le mélangeage et le malaxage d'un lot de référence de caoutchouc brut et d'un matériau secondaire dans une composition spécifique afin de préparer une composition de caoutchouc de référence, et la mesure d'une propriété d'élasticité d'un caoutchouc réticulé de référence obtenu au moyen de la réticulation de la composition de caoutchouc de référence ;
une seconde étape comprenant le mélangeage et le malaxage d'un lot cible de caoutchouc brut et d'un matériau secondaire dans la même composition spécifique que celle de la première étape afin de préparer une composition de caoutchouc cible, et la mesure d'une propriété d'élasticité d'un caoutchouc réticulé cible obtenu au moyen de la réticulation de la composition de caoutchouc cible ; et
une troisième étape comprenant la comparaison de la propriété d'élasticité du caoutchouc réticulé cible avec la propriété d'élasticité du caoutchouc réticulé de référence, afin d'établir une condition de mélangeage et/ou une condition de compression à adopter en cas de malaxage du lot cible du caoutchouc brut dans une composition de produit,
dans lequel le lot cible du caoutchouc brut est malaxé dans la composition de produit sous la condition établie dans la troisième étape, afin d'obtenir une composition de caoutchouc destinée à un produit.

2. Le procédé de malaxage de caoutchouc selon la revendication 1,
dans lequel la composition spécifique est une composition de caoutchouc pur dans laquelle le matériau secondaire est constitué d'un acide aliphatique, de l'oxyde de zinc, d'un agent de réticulation et d'un accélérateur de vulcanisation, ou une composition standard dans laquelle le matériau secondaire est constitué d'un acide aliphatique, de l'oxyde de zinc, d'un agent de renforcement, d'un agent de réticulation et d'un accélérateur de vulcanisation.

3. Le procédé de malaxage de caoutchouc selon la revendication 1,
dans lequel la composition spécifique est une composition de caoutchouc pur dans laquelle le matériau secondaire est constitué d'un acide aliphatique, de l'oxyde de zinc, d'un agent de réticulation et d'un accélérateur de vulcanisation.

4. Le procédé de malaxage de caoutchouc selon l'une quelconque des revendications 1 à 3,
dans lequel la propriété d'élasticité du caoutchouc réticulé de référence dans la troisième étape est une propriété d'élasticité mesurée à l'aide d'un lot de référence du caoutchouc brut, ou une valeur moyenne des propriétés d'élasticité mesurées chacune à l'aide d'un lot de référence différent du caoutchouc brut pour chaque lot de référence.

5. Le procédé de malaxage de caoutchouc selon l'une quelconque des revendications 1 à 3,
dans lequel la propriété d'élasticité du caoutchouc réticulé de référence dans la troisième étape est une propriété d'élasticité mesurée à l'aide d'un lot de référence du caoutchouc brut.

6. Le procédé de malaxage de caoutchouc selon les revendications 4 ou 5,
dans lequel ledit lot de référence est un lot précédent du lot cible.

7. Le procédé de malaxage de caoutchouc selon l'une quelconque des revendications 1 à 6,
dans lequel la propriété d'élasticité est au moins une propriété choisie parmi une constante d'élasticité statique, une constante d'élasticité dynamique et une dureté.

8. Le procédé de malaxage de caoutchouc selon l'une quelconque des revendications 1 à 6,
dans lequel la propriété d'élasticité est une constante d'élasticité statique.

9. Le procédé de malaxage de caoutchouc selon l'une quelconque des revendications 1 à 8,
dans lequel la condition de mélangeage dans la troisième étape est au moins une condition choisie parmi une quantité du caoutchouc brut mélangé, une quantité de noir de carbone, une quantité d'un agent de réticulation et une quantité d'une huile.

10. Le procédé de malaxage de caoutchouc selon l'une quelconque des revendications 1 à 9,
dans lequel la condition de compression dans la troisième étape est au moins une condition choisie parmi une valeur de puissance d'une machine à malaxer fermée à être utilisée, une vitesse de rotation d'un rotor, une température d'un matériau de caoutchouc pendant le malaxage et un temps de compression.

11. Le procédé de malaxage de caoutchouc selon l'une quelconque des revendications 1 à 10,
dans lequel le lot de référence et le lot cible des caoutchouc bruts sont du caoutchouc naturel.

12. Le procédé de malaxage de caoutchouc selon l'une quelconque des revendications 1 à 11,
dans lequel la composition de produit dans la troisième étape est une composition destinée à du caoutchouc anti-vibration, et
une composition de caoutchouc destinée à du caoutchouc anti-vibration est obtenue au moyen du malaxage du lot cible du caoutchouc brut dans la composition de produit sous la condition établie dans la troisième étape.
